# EUROPEAN PATENT APPLICATION

(11) **EP 4 790 950 A1**
(43) Date of publication of application: **12.08.2026**
(21) Application number: 24876415.1
(22) Date of filing: 27.09.2024
(51) Int. Cl.: H04L 9/40

(54) **DATA MESSAGE TRANSMISSION METHOD, TRANSMISSION AUTHORIZATION METHOD AND ELECTRONIC DEVICE**

(30) Priority: 11.10.2023 CN 202311316315
(71) Applicant: ZTE CORPORATION, Shenzhen, Guangdong 518057 (CN)
(72) Inventor: YAN, Xincheng, Shenzhen, Guangdong 518057 (CN); ZHOU, Na, Shenzhen, Guangdong 518057 (CN); JIANG, Zhihong, Shenzhen, Guangdong 518057 (CN); SONG, Lin, Shenzhen, Guangdong 518057 (CN); WU, Tianyuan, Shenzhen, Guangdong 518057 (CN); JI, Hongwei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/121658
(87) International publication number: WO 2025/077597

(57) **Abstract**

Disclosed in the present application are a data message transmission method, a transmission authorization method and an electronic device. The data message transmission method comprises: acquiring first verification information; when a first data message is received, on the basis of the first data message, acquiring information to be verified; on the basis of the first verification information, verifying the information to be verified; and, when the verification has passed, transmitting the first data message.

## Description

### CROSS-REFERENCE TO RELATED APPLICATIONS

The present application claims priority to the Chinese Patent Application No. 202311316315.2 filed on October 11, 2023 to the CNIPA, and entitled "DATA MESSAGE TRANSMISSION METHOD, TRANSMISSION AUTHORIZATION METHOD AND ELECTRONIC DEVICE", the entire content of which is incorporated herein by reference.

### TECHNICAL FIELD

The present application relates to the field of network security, in particular to a method for transmitting a data packet, a transmission authorization method and an electronic device.

### BACKGROUND

With the continuous progress of society and the continuous development of economy, the network has become an essential part of people's daily lives. In the processes of network cloudification/ubiquitous evolution, as well as integration of To Business (2B) services and To Customer (2C) services, the openness of the network leads to an increasing risk of data information exposure, and continuous upgrading of network attack methods. A conventional "patch-based" security protection mode has problems such as structural rigidity, hindsight, and lack of collaboration. Moreover, the stacked and reinforced security architecture relies on a passive protection mode of prior information, and thus it is difficult to meet the demands of new network security protection.

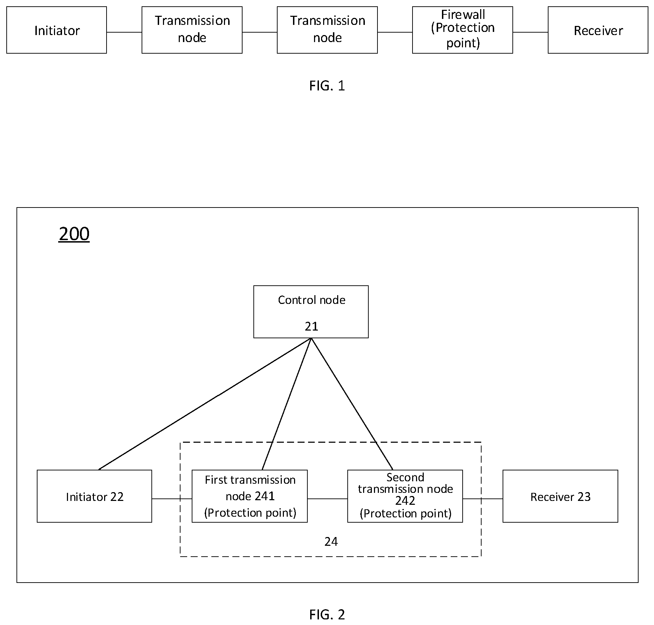

The network security protection in the related art usually uses specialized protective devices such as an externally added firewall to protect a target, as shown in FIG. 1. However, such network security protection manner has the problems of lagging and inefficient protection.

### SUMMARY

Embodiments of the present application provide a method for transmitting a data packet, a transmission authorization method and an electronic device.

In a first aspect, a method for transmitting a data packet is provided, performed by a transmission node between an initiator and a receiver. The method includes: acquiring first verification information; acquiring, in a case where a first data packet is received, to-be-verified information based on the first data packet; verifying the to-be-verified information based on the first verification information; and transmitting the first data packet in a case where verification is passed.

In a second aspect, a transmission authorization method for a data packet is provided. The method includes: determining, by a control node, to allow an initiator corresponding to initiator information to access a receiver corresponding to receiver information based on the initiator information and the receiver information; and sending, by the control node, first verification information to the initiator or a transmission node between the initiator and the receiver.

In a third aspect, an electronic device is provided. The electronic device includes a processor and a memory, the memory stores a program or instruction runnable on the processor, and the program or the instruction, when executed by the processor, implements the steps of the method for transmitting the data packet as described in the first aspect, or implements the steps of the transmission authorization method for the data packet as described in the second aspect.

In a fourth aspect, a readable storage medium is provided. The readable storage medium stores a program or an instruction thereon, and the program or the instruction, when executed by a processor, implements the steps of the method for transmitting the data packet as described in the first aspect, or implements the steps of the transmission authorization method for the data packet as described in the second aspect.

### BRIEF DESCRIPTION OF DRAWING(S)

Accompanying drawings here, which are incorporated in and constitute a part of this specification, illustrate embodiments consistent with the present application and together with the specification, serve to explain the principles of the present application.
FIG. 1 shows a schematic structural diagram of a network security protection system in the related art.
FIG. 2 shows a schematic structural diagram of a distributed security protection system provided by an exemplary embodiment of the present application.
FIG. 3 shows a schematic flowchart of a method for transmitting a data packet provided by an exemplary embodiment of the present application.
FIG. 4 shows a schematic flowchart of a transmission authorization method for a data packet provided by an exemplary embodiment of the present application.
FIG. 5 shows a schematic flowchart of another transmission authorization method for a data packet provided by an exemplary embodiment of the present application.
FIG. 6 shows a schematic flowchart of another method for transmitting a data packet provided by an exemplary embodiment of the present application.
FIG. 7 shows a schematic flowchart of another transmission authorization method for a data packet provided by an exemplary embodiment of the present application.
FIG. 8 shows a schematic flowchart of another method for transmitting a data packet provided by an exemplary embodiment of the present application.
FIG. 9 shows a schematic flowchart of another transmission authorization method for a data packet provided by an exemplary embodiment of the present application.
FIG. 10 shows a schematic flowchart of another method for transmitting a data packet provided by an exemplary embodiment of the present application.
FIG. 11 shows a schematic flowchart of another transmission authorization method for a data packet provided by an exemplary embodiment of the present application.
FIG. 12 shows a schematic flowchart of another method for transmitting a data packet provided by an exemplary embodiment of the present application.
FIG. 13 shows a schematic structural diagram of an electronic device provided by an exemplary embodiment of the present application.

### DETAILED DESCRIPTION

Exemplary embodiments will be illustrated in detail here, examples of which are represented in accompanying drawings. When the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

FIG. 2 shows a schematic structural diagram of a distributed security protection system provided by an exemplary embodiment of the present application. Referring to FIG. 2, the distributed security protection system 200 includes a control node 21, an initiator 22, a receiver 23, and a transmission node 24. The transmission node 24 may include a first transmission node 241 and a second transmission node 242, and the first transmission node 241 and the second transmission node 242 may serve as security protection points for security protection. The embodiment of the present application takes two transmission nodes as an example for explanation, but is not only limited to two transmission nodes.

The distributed security protection system provided by the embodiment of the present application may verify a data packet that currently needs to be transmitted at any transmission node between the initiator and the receiver, thereby enabling security protection at any transmission node instead of being concentrated near the receiver to disperse the pressure of an individual protection point, and effectively solving the problem of lagging and inefficient network security protection.

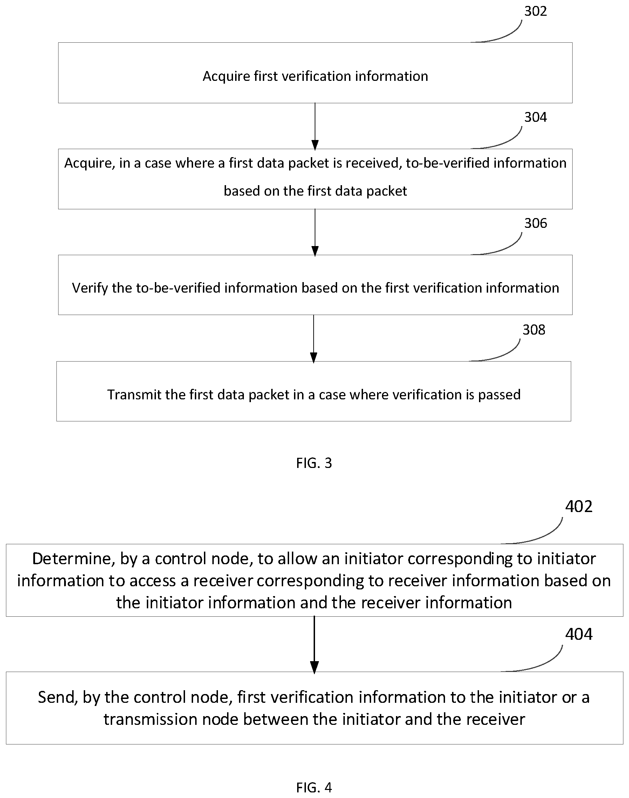

FIG. 3 shows a schematic flowchart of a method for transmitting a data packet provided by an exemplary embodiment of the present application. The method is applied to the transmission node between the initiator and the receiver in the above system, and the method includes the following steps.

At step 302, first verification information is acquired.

Optionally, the first verification information is sent by a control node to the transmission node after initiator information and receiver information are confirmed. The first verification information may include a secret key, a parameter value of a verification input parameter, and policy information. The first verification information is used to verify to-be-verified information.

At step 304, in a case where a first data packet is received, the to-be-verified information is acquired based on the first data packet.

The first data packet may include the initiator information, the receiver information, a slice identifier of a packet, a business identifier, or a tunnel identifier. The to-be-verified information includes at least one of the initiator information, the receiver information, the slice identifier of the package, the business identifier, or the tunnel identifier.

At step 306, the to-be-verified information is verified based on the first verification information.

According to the first verification information acquired from the control node, the transmission node verifies the to-be-verified information acquired from the first data packet that needs to be transmitted, and may learn whether the first data packet is correct, or whether the first data packet is attacked and thus tampered during the previous transmission process, or whether the first data packet is consistent with a first data packet initially transmitted by the initiator. This thus provides security protection for data transmission in the network, and prevents tampered or erroneous data packets from being transmitted to the receiver normally.

At step 308, the first data packet is transmitted in a case where the verification is passed.

In an optional implementation, when there are a plurality of transmission nodes, in a case where the verification is passed, the first data packet is transmitted to a next transmission node of the current transmission node, and verification is performed again.

In the embodiment of the present application, by acquiring the first verification information from the control node and acquiring the to-be-verified information from the received first data packet, the transmission node verifies the to-be-verified information according to the first verification information, judges whether the first data packet is correct, or whether the first data packet is tampered during the transmission process, or whether the first data packet is consistent with the first data packet initially sent by the initiator, so as to determine whether an anomaly occurs to data transmission in the network. Moreover, in a case where the to-be-verified information passes the verification, it may be determined that no anomaly occurs to data transmission of the current first data packet, and the data transmission in the network is normal. The first data packet may be transmitted through the current transmission node. In a case where the to-be-verified information does not pass the verification, the first data packet may be selected to be discarded or denied to be transmitted to avoid transmitting the erroneous or tampered first data packet to the next transmission node, or even to the receiver. The security during the transmission process of the first data packet is verified in a timely manner at the transmission node, rather than waiting until the data packet is transmitted to the nearby receiver, so as to solve the problem of lagging and inefficient network security protection.

In an implementation, above step 302 of acquiring the first verification information may include that: the transmission node receives a first message sent by a control node, wherein the first message carries the first verification information; or the transmission node acquires the first verification information configured at the transmission node.

Before verifying the received data packet, the transmission node needs to acquire the first verification information. The first verification information may be acquired by receiving a first message sent by the control node based on the initiator information and the receiver information. The message carries the first verification information, which means that the transmission node acquires the first verification information through the first message sent by the control node. Alternatively, before transmitting the first data packet, the transmission node is pre-configured with the first verification information. Before the to-be-verified information needs to be verified, the transmission node acquires the first verification information already configured at the transmission node, and verifies the to-be-verified information acquired from the first data packet based on the acquired first verification information above, so as to determine whether the first data packet needing to be transmitted is consistent with the first data packet initially transmitted by the initiator, thereby determining whether an anomaly occurs to the first data packet in the previous transmission process and achieving network security protection.

In an implementation, prior to receiving, by the transmission node, the first message sent by the control node, the method may further include that: the transmission node sends a second message to the control node, wherein the second message is used to request the first verification information.

In the embodiment of the present application, the transmission node needs to first acquire the first verification information when verifying the to-be-verified information. The transmission node may send a second message to the control node, and request the first verification information from the control node through the second message. After receiving the second message and determining the initiator information and the receiver information, the control node sends the first message to the transmission node, and the first message carries the first verification information. By sending the second message, the transmission node requests the control node to send the second message carrying the first verification information, so that the control node sends the second message carrying the first verification information when there is a verification demand, so as to save signaling overhead.

In an implementation, sending, by the transmission node, the second message to the control node may include that: the transmission node sends the second message to the control node after receiving a second data packet, wherein the second message carries initiator information and receiver information of the second data packet; or the transmission node sends the second message to the control node after being powered on.

In the embodiment of the present application, a case of triggering the transmission node to send the second message requesting the first verification information to the control node may include the transmission node receiving the second data packet or the transmission node being powered on. That is to say, after being powered on, the transmission node immediately sends the second message for requesting the first verification information to the control node, so that the first verification information may be quickly called for verification when needed. Alternatively, the transmission node may send the second message for requesting the first verification information to the control node upon receiving the second data packet, so as to save signaling overhead.

In an implementation, the above initiator information includes at least one of the following: an initiator identifier, an initiator Internet protocol (IP), an initiator address field, an initiator port, or media access control (MAC); and the above receiver information includes at least one of the following: a receiver identifier, a receiver IP, a receiver address field, a receiver port, or MAC.

In the embodiment of the present application, the transmission node informs the control node through the second message according to information carried by the received second data packet, such as the initiator information and the receiver information, so that the control node confirms the initiator and the receiver according to the initiator information and the receiver information of the second data packet, and thus sends the first message carrying the first verification information to the transmission node after confirmation. The control node can send the first verification information corresponding to the second data packet, rather than verification information for data packets transmitted by other initiators, to the transmission node according to the initiator information and the receiver information of the second data packet carried by the second message sent by the transmission node, thereby ensuring the validity of the verification.

In an implementation, after receiving, by the transmission node, the first message sent by the control node, the method may further include that: in a case where the transmission node is a first transmission node, second verification information is sent to a second transmission node based on second transmission node information carried in the first message, wherein the first transmission node is located before the second transmission node on a transmission path from the initiator to the receiver.

The second transmission node information includes at least one of the following: anIP of the second transmission node, an ingress interface of the second transmission node, an egress interface of the second transmission node, a virtual local area network (VLAN) identifier of the second transmission node, a VXLAN identifier of the second transmission node, or a VXLAN network identifier (VNI) of the second transmission node.

In an optional implementation, the first message carries first indication information, and the first indication information is used to indicate a node type of the transmission node. From this, the node type of the transmission node may be determined by the first indication information carried in the first message, thereby determining whether the verification information needs to be transmitted.

In the embodiment of the present application, the node type of the transmission node may include the first transmission node and the second transmission node, and the first transmission node is located before the second transmission node. It may also be understood that the first transmission node is closer to the initiator than the second transmission node, and the second transmission node is closer to the receiver than the first transmission node. When the first message carrying the first verification information sent by the control node is received by the first transmission node and the first data packet further needs to be verified at the second transmission node after passing the verification of the first transmission node, the first transmission node sends second verification information to the second transmission node based on second transmission node information carried in the first message. At this time, it is not required to request the second verification information used by the second transmission node to verify the to-be-verified information from the control node again, and the second verification information may be acquired from the first transmission node, so as to save signaling overhead.

In an implementation, above acquiring the first verification information may include that: in a case where the transmission node is the second transmission node, a third message sent by the first transmission node is received, wherein the third message carries the first verification information, and the first transmission node is located before the second transmission node on a transmission path from the initiator to the receiver.

In the embodiment of the present application, the way of acquiring the first verification information varies based on the different node types of transmission nodes. In the case where the node type is the first transmission node, the first verification information may be requested from the control node, or the configured first verification information may be acquired. While in a case where the node type is the second transmission node, the first verification information may be acquired by receiving the third message carrying the first verification information from the first transmission node, or the configured first verification information may be acquired.

In an optional implementation, the second transmission node may not acquire the first verification information through the third message sent by the first transmission node, and instead, request the first verification information from the control node.

In an implementation, the above first data packet carries or includes a first verification code; the first verification information includes a secret key and a verification input parameter; and then above verifying the to-be-verified information based on the first verification information may include the following steps: step 1, a parameter value of the verification input parameter for the first data packet is acquired; step 2, calculation is performed based on the secret key and the acquired parameter value to obtain a second verification code; and step 3, whether the first verification code carried in the first data packet matches the obtained second verification code is verified.

In the embodiment of the present application, the transmission node may calculate the secret key and the parameter value of the verification input parameter in the first verification information by using, for example, a cryptographic algorithm, to obtain the second verification code, and then the to-be-verified information is verified based on the first verification information, so that whether the to-be-verified information passes the verification may be determined by verifying whether the first verification code obtained from the first data packet matches the second verification code.

In an implementation, when whether the first verification code carried in the first data packet matches the obtained second verification code is verified, transmitting the first data packet in a case where the verification is passed may include that: in a case where the transmission node is the first transmission node and the verification is passed, the first data packet is transmitted to the second transmission node after the first transmission node information is added to the first data packet, wherein the first transmission node is located before the second transmission node on the transmission path from the initiator to the receiver.

The first transmission node information includes at least one of the following: an IP of the first transmission node, an ingress interface of the first transmission node, an egress interface of the first transmission node, a VLAN identifier of the first transmission node, a VXLAN identifier of the first transmission node, or a VXLAN network identifier (VNI) of the first transmission node.

In the embodiment of the present application, in the case where the transmission node is the first transmission node and the verification is passed, the first transmission node needs to add the first transmission node information to the first data packet before transmitting the first data packet to the second transmission node, so that the second transmission node may acquire the second verification information from the first transmission node rather than requesting the control node, so as to save signaling overhead.

In an implementation, the above first verification information may include: a verification value of the verification input parameter. The to-be-verified information acquired by the transmission node based on the first data packet may include the parameter value of the verification input parameter of the first data packet, and then the transmission node may verify whether the parameter value of the verification input parameter of the first data packet matches the verification value in the first verification information to determine whether the to-be-verified information passes the verification. The to-be-verified information may be quickly verified without complex calculation of the secret key and the parameter value, thereby improving the efficiency of verification.

In an implementation, the first verification information includes policy information, wherein the policy information includes an authorization result, and the authorization result includes one of the following: allowing transmission, not allowing transmission, or denying transmission. Then, verifying the to-be-verified information based on the first verification information may include one of the following: (1) verifying whether the initiator and the receiver of the first data packet match an initiator and a receiver for allowing transmission in the authorization result; (2) verifying whether the initiator and the receiver of the first data packet match an initiator and a receiver for not allowing transmission in the authorization result; or (3) verifying whether the initiator and the receiver of the first data packet match an initiator and a receiver for denying transmission in the authorization result.

In the embodiment of the present application, the above first verification information may include the policy information, wherein the policy information may include the authorization result. The authorization result includes various situations, such as allowing transmission, not allowing transmission, or denying transmission. Correspondingly, verifying the to-be-verified information based on the first verification information may include at least one of the above (1), (2), or (3), the verification under various authorization results is comprehensively considered, and the reliability of security protection is ensured.

In an implementation, the above policy information may further include a first value of the verification input parameter; and then verifying the to-be-verified information based on the first verification information may include that: in a case where the initiator and the receiver of the first data packet match the initiator and the receiver in the authorization result, whether a second value of the verification input parameter of the first data packet matches the first value of the verification input parameter is verified.

In the embodiment of the present application, the policy information includes the authorization result and may further include the first value of the verification input parameter. In a case where the initiator and the receiver of the first data packet match the initiator and the receiver in the authorization result, whether the to-be-verified information passes the verification may be determined by verifying whether the second value of the verification input parameter of the first data packet matches the first value of the verification input parameter. That is, for the verification of the first data packet that matches the initiator and the receiver in the authorization result, whether the verification is passed may be judged by directly making the first value of the verification input parameter in the policy information to match the second value of the verification input parameter of the first data packet, thereby improving the efficiency of security protection.

In an implementation, the above verification input parameter includes at least one of the following: the initiator information, the receiver information, the first transmission node information, the second transmission node information, a slice identifier, a business identifier, or a tunnel identifier.

The transmission node may make the above information included in the verification input parameter in the first data packet to match the above information included in the verification input parameter in the policy information, so that whether the information of the two matches can be accurately determined, and thus whether the to-be-verified information passes the verification is accurately determined.

In an implementation, the initiator includes a terminal and a network side device; the receiver includes a terminal and a network side device; wherein a network side device includes one of the following: a server, a manager, a controller, or an access gateway; and the transmission node includes one of the following: a router, a switch, a gateway, or customer premise equipment (CPE).

FIG. 4 shows a schematic flowchart of a transmission authorization method for a data packet provided by an exemplary embodiment of the present application. The method is applied to the control node in the above system, and the method includes the following steps.

At step 402, the control node determines to allow an initiator corresponding to initiator information to access a receiver corresponding to receiver information based on the initiator information and the receiver information.

The initiator information and the receiver information may be sent to the control node through the initiator, or sent to the control node through a transmission node. The control node performs authorization determination on the initiator and the receiver according to the received initiator information and receiver information.

At step 404, the control node sends first verification information to the initiator or the transmission node between the initiator and the receiver.

In the embodiment of the present application, after determining to allow the initiator corresponding to the initiator information to access the receiver corresponding to the receiver information, the control node may send the first verification information to the initiator or the transmission node between the initiator and the receiver. The initiator transmits a first data packet carrying the first verification information to the transmission node, so that the transmission node performs subsequent verification according to the first verification information acquired from the control node and the first verification information carried by the first data packet.

In an implementation, prior to step 402, the above transmission authorization method for the data packet may further include that: an authorization request sent by the initiator or the transmission node is received.

The authorization request carries the initiator information and the receiver information. After receiving the authorization request initiated by the initiator or the transmission node, the control node determines an authorization status of the initiator and the receiver according to the initiator information and the receiver information carried in the authorization request, and thus further generates the first verification information, which is then sent to the initiator or the transmission node. The transmission node may then perform verification based on the first verification information acquired from the control node and the to-be-verified information of the first data packet.

In an implementation, above step 404 of sending, by the control node, the first verification information to the initiator may include that: at step 4041, the control node calculates a first verification code based on a secret key, and a first value of a verification input parameter corresponding to allowing the initiator to access the receiver; and at step 4042, the control node sends an authorization response to the initiator, wherein the authorization response carries the first verification code.

In the embodiment of the present application, after receiving the authorization request sent by the initiator, the control node calculates the first verification code using a cryptographic algorithm and the like based on the secret key and the first value of the verification input parameter corresponding to allowing the initiator to access the receiver. The first verification code is carried in the authorization response and sent to the initiator, so that security verification may be achieved by verifying the first verification code at the transmission node.

In an implementation, above step 404 of sending, by the control node, the first verification information to the transmission node may include that: the control node sends a first message to the transmission node, wherein the first message carries the initiator information and the receiver information.

In the embodiment of the present application, the control node sends the first message to the transmission node after receiving the authorization request from the transmission node and performing authorization confirmation on the initiator and the receiver. The first message carries the first verification information, such as the initiator information and the receiver information, so that the transmission node verifies the to-be-verified information of the first data packet according to the first verification information.

In an implementation, the first message above further carries the secret key. When receiving the first message, the transmission node may obtain a second verification code through calculation according to the secret key in the first message and the parameter value of the verification input parameter in the first verification information, and determine whether the to-be-verified information passes the verification according to whether the first verification code of the above first data packet matches the second verification code.

In an implementation, the above first message further carries a node type of the transmission node above. The way for the transmission node to acquire the first verification information varies based on the different node types of the transmission node. In a case where the node type is the first transmission node, the first verification information may be requested from the control node, or the configured first verification information may be acquired. While in a case where the node type is the second transmission node, the first verification information may be acquired by receiving a third message carrying the first verification information sent by the first transmission node, or the configured first verification information may be acquired. Optionally, the second transmission node may not acquire the first verification information through the third message sent by the first transmission node, or may request the first verification information from the control node.

In the embodiment of the present application, in a case where both the first transmission node and the second transmission node send the authorization request to the control node, and where the second transmission node does not perform verification based on the verification information sent by the first transmission node, the control node will also authorize two verification codes for the initiator. Therefore, after the first transmission node passes the verification, there is no need to add first transmission node information to the first data packet. Thus, in a case where the verification is performed through a verification code different from that of the first transmission node when the first data packet is transmitted to the second transmission node, the information load of the data packet can be reduced.

In an implementation, the above first verification information further includes: a first value, which is sent to the transmission node, of a verification input parameter corresponding to allowing the initiator to access the receiver. In a case where the initiator and the receiver of the first data packet match the initiator and the receiver in the authorization result, the first value of the verification input parameter is used by the transmission node to verify whether a second value of the verification input parameter of the first data packet matches the first value of the verification input parameter, so as to determine whether the to-be-verified information passes the verification, thereby achieving security protection.

In an implementation, the above first verification information further includes an authorization result. The authorization result includes various situations, such as allowing transmission, not allowing transmission, or denying transmission. Correspondingly, verifying the to-be-verified information based on the first verification information may include at least one of the following: (1) verifying whether the initiator and the receiver of the first data packet match an initiator and a receiver for allowing transmission in the authorization result; (2) verifying whether the initiator and the receiver of the first data packet match an initiator and a receiver for not allowing transmission in the authorization result; or (3) verifying whether the initiator and the receiver of the first data packet match an initiator and a receiver for denying transmission in the authorization result. The verification under various authorization results is comprehensively considered, and the reliability of security protection is ensured.

In an implementation, the above first message includes all authorization information allowing the initiator to access the receiver. The authorization information covers the allowing transmission in the authorization result, as well as the initiator and the receiver allowed for transmission, so that the transmission node can learn the existence of the initiator and the receiver allowed for transmission, as well as the specific information of the initiator and the receiver allowed for transmission.

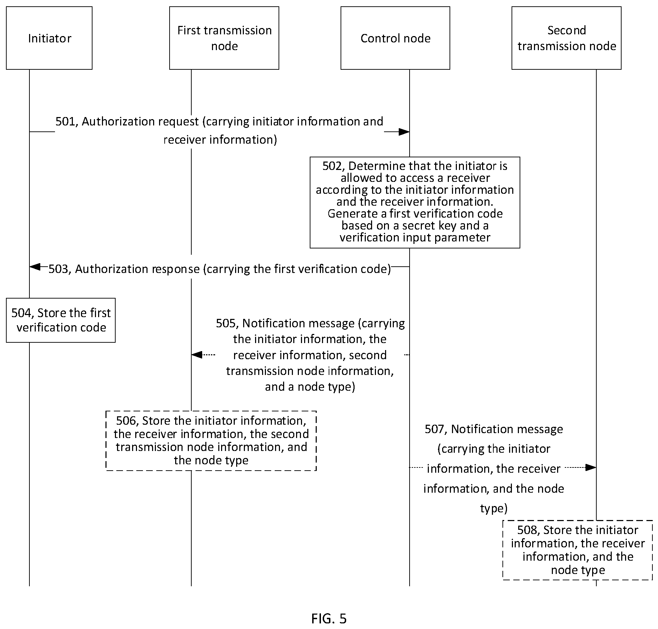

FIG. 5 shows a schematic flowchart of another transmission authorization method for a data packet provided by an exemplary embodiment of the present application. In this method embodiment, an initiator sends an authorization request to a control node, wherein first verification information includes a verification code and a verification input parameter. Referring to FIG. 5, the method includes the following steps.

At step 501, the initiator sends the authorization request to the control node, wherein the authorization request carries initiator information and receiver information. This message may pass through a first transmission node or not.

At step 502, the control node determines that the initiator may access the receiver according to the initiator information and the receiver information, and thus performs authorization. The control node generates a first verification code in a case of determining that the initiator needs to pass through the first transmission node and a second transmission node to access the receiver. A generation manner of the first verification code may be: using a cryptographic algorithm to calculate values of a secret key and the verification input parameter.

At step 503, the control node sends an authorization response to the initiator, wherein the authorization response carries the first verification code. This message may pass through the first transmission node or not.

At step 504, the initiator receives the authorization response, and acquires and stores the first verification code.

In an optional implementation, at step 505, the control node sends a notification message to the first transmission node, wherein the notification message carries the initiator information, the receiver information, second transmission node information, and a node type. The node type includes: this node is the first transmission node, and a verification operation corresponding to the first transmission node is performed.

In an optional implementation, at step 506, the first transmission node stores the initiator information, the receiver information, the second transmission node information, and the node type.

The way for the first transmission node to acquire the initiator information, the receiver information, the second transmission node information, and the node type may also be as follows: after receiving a data packet from the initiator, the first transmission node sends an authorization request to the control node, and the control node sends the initiator information, the receiver information, the second transmission node information, and the node type to the first transmission node. In this way, the first transmission node may cache the data packet, and send the data packet to the receiver after the verification is passed, or discard the data packet. Besides, other steps are consistent with the above process and will not be repeated here.

In an optional implementation, at step 507, the control node sends a notification message to the second transmission node, wherein the notification message carries the initiator information, the receiver information, and the node type.

In an optional implementation, at step 508, the second transmission node stores the initiator information, the receiver information, and the node type. The node type includes: this node is the second transmission node, and a verification operation corresponding to the second transmission node is performed.

The way for the second transmission node to acquire the initiator information, the receiver information, and the node type may also be one of the following: (1) the control node notifies the first transmission node of the second transmission node information and the node type, and the first transmission node notifies the second transmission node of the initiator information, the receiver information, and the node type. In this way, other steps are consistent with the above process and will not be repeated here. (2) After receiving the data packet from the initiator, the second transmission node sends the authorization request to the control node, and the control node sends the initiator information, the receiver information, and the node type to the second transmission node. In this way, the second transmission node may cache the data packet, and send the data packet to the receiver after the verification is passed, or discard the data packet. Besides, other steps are consistent with the above process and will not be repeated here.

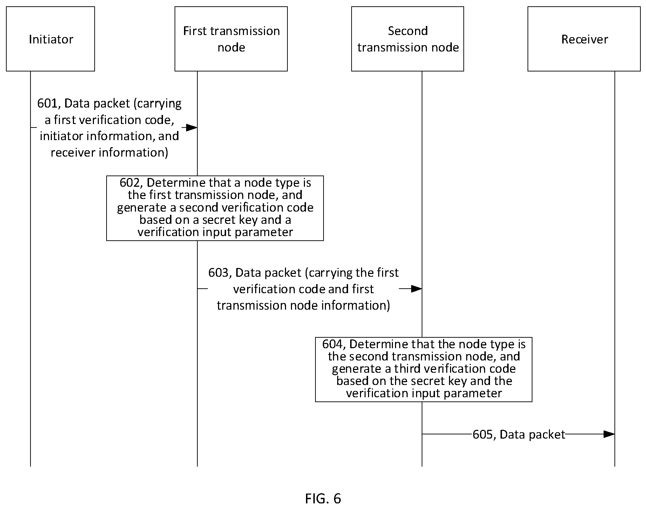

FIG. 6 shows a schematic flowchart of another method for transmitting a data packet provided by an exemplary embodiment of the present application. In this method embodiment, a data packet is verified by a first transmission node and a second transmission node. Referring to FIG. 6, the method includes the following steps.

At step 601, an initiator sends the data packet to a receiver via the first transmission node, wherein the data packet carries a first verification code, initiator information, and receiver information.

At step 602, the first transmission node uses a cryptographic algorithm to perform calculation on a secret key and a verification input parameter, to generate a second verification code.

The initiator information, the receiver information, a slice identifier, a business identifier, and a tunnel identifier in the verification input parameter are acquired from the data packet. The IP, ingress interface, and the VLAN/VxLAN/VNI identifier of the first transmission node IP serve as the IP, interface, and VLAN/VxLAN/VNI identifier for receiving the data packet of the first transmission node. An egress interface of the first transmission node is an interface for sending the data packet of the first transmission node. Second transmission node information is corresponding second transmission node information obtained by the first transmission node based on locally stored information by searching for the initiator information and the receiver information. The first transmission node compares the second verification code with the first verification code carried in the data packet. If the verification codes are the same, the verification is successful, and the packet is allowed to pass through. Otherwise, the packet is denied to pass through.

In an optional implementation, prior step 602, the method may further include that: the first transmission node determines itself as the first transmission node through the node type.

At step 603, the first transmission node sends the data packet to the receiver via the second transmission node, wherein the data packet carries first transmission node information. The first transmission node may encapsulate an outer IP header, so that a first transmission node IP and a second transmission node IP are placed in the outer IP header, and remaining information of the first transmission node may be placed in an option or extension header of the packet. Alternatively, the outer IP header may not be encapsulated, and the first transmission node information is placed in an option or extension header of the packet.

At step 604, the second transmission node uses a cryptographic algorithm to perform calculation on the secret key and the verification input parameter to generate .

The initiator information, the receiver information, the first transmission node information, the slice identifier, the business identifier, and the tunnel identifier in the verification input parameter are acquired from the data packet. The IP, ingress interface, and VLAN/VxLAN/VNI identifier of the second transmission node are the IP, interface, and VLAN/VxLAN/VNI identifier for receiving the data packet of the second transmission node. The egress interface of the second transmission node is an interface for sending the data packet of the second transmission node. The second transmission node compares the third verification code with the first verification code carried in the data packet. If the verification codes are the same, the verification is successful, and the packet is allowed to pass through. Otherwise, the packet is denied to pass through. Optionally, processing performed before this step is that the second transmission node determines itself as the second transmission node through the node type.

At step 605, the second transmission node sends the data packet to the receiver.

In the embodiment of the present application, the first transmission node and the second transmission node may perform security check on some streams instead of checking all data packets. Information of some streams may be statically configured in advance or configured through the control node.

In the embodiment of the present application, the second transmission node may not perform verification based on the first transmission node information. In this case, in the embodiment of FIG. 5, the first transmission node does not need to acquire the second transmission node information, and the control node authorizes two verification codes for the initiator. In the embodiment of FIG. 6, the initiator carries two verification codes, the first transmission node verifies one of the verification codes, the first transmission node does not need to carry the first transmission node information in the data packet, and the second transmission node verifies the other verification code carried in the packet. Other verification steps are consistent with the above embodiments and will not be repeated here.

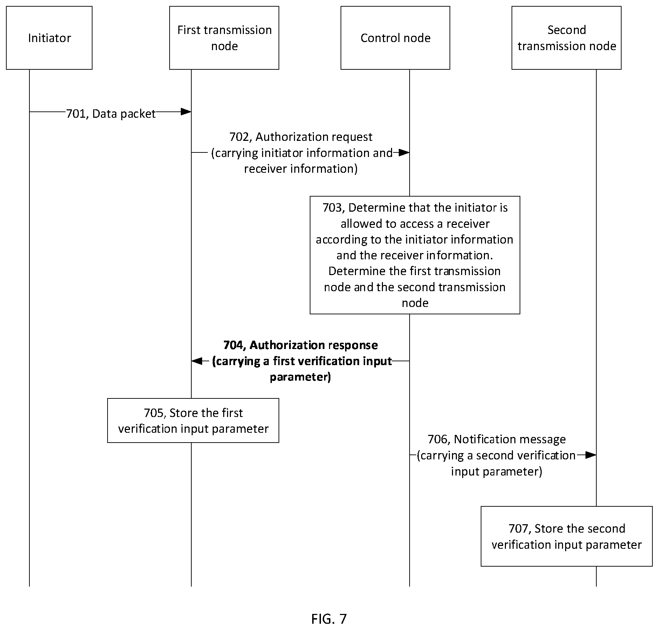

FIG. 7 shows a schematic flowchart of another transmission authorization method for a data packet provided by an exemplary embodiment of the present application. In this method embodiment, a first transmission node sends an authorization request to a control node, wherein first verification information includes a verification input parameter. Referring to FIG. 7, the method includes the following steps.

At step 701, an initiator sends a data packet to a receiver via the first transmission node.

At step 702, if the first transmission node determines that there are no first verification input parameters corresponding to initiator information and receiver information, the authorization request is sent to the control node and carries the initiator information and the receiver information, and meanwhile, the data packet is cached or discarded.

At step 703, the control node determines that the initiator may access the receiver according to the initiator information and the receiver information, and then performs authorization. The control node determines that the initiator needs to pass through the first transmission node and a second transmission node to access the receiver.

At step 704, the control node sends an authorization response to the first transmission node, wherein the authorization response carries the first verification input parameter.

At step 705, the first transmission node acquires and stores the first verification input parameter. In a case of caching the data packet in step 702, if the verification input parameter passes the check, the cached data packet is sent.

The way for the first transmission node to acquire the first verification input parameter may further be as follows: the initiator sends the authorization request to the control node, and the control node notifies the first transmission node of the first verification input parameter. Besides, other steps are consistent with the above process and will not be repeated here.

At step 706, the control node sends a notification message to the second transmission node, wherein the notification message carries a second verification input parameter.

At step 707, the second transmission node acquires and stores the second verification input parameter.

The way for the second transmission node to acquire the second verification input parameter may also be one of the following: (1) the control node sends second transmission node information and the second verification input parameter to the first transmission node, and the first transmission node notifies the second transmission node of the second verification input parameter. In this way, other steps are consistent with the above process and will not be repeated here. (2) After receiving the data packet from the initiator, the second transmission node sends the authorization request to the control node, and the control node sends the second verification input parameter to the second transmission node. In this way, the second transmission node may cache the data packet, and send the data packet to the receiver after the verification is passed, or discard the data packet. Besides, other steps are consistent with the above process and will not be repeated here.

In this embodiment, the first verification input parameter may not include the second transmission node information, and the second verification input parameter may not include the first transmission node information.

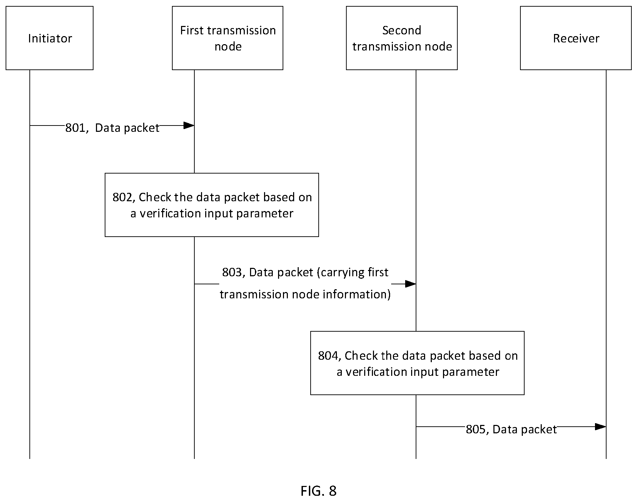

FIG. 8 shows a schematic flowchart of another method for transmitting a data packet provided by an exemplary embodiment of the present application. In this method embodiment, verification information is acquired from the stored verification information based on a first transmission node and a second transmission node. Referring to FIG. 8, the method includes the following steps.

At step 801, an initiator sends a data packet to a receiver via the first transmission node.

At step 802, the first transmission node searches for a corresponding first verification input parameter from the memory based on initiator information and receiver information. Meanwhile, a third verification input parameter is acquired. Then, the first transmission node compares the third verification input parameter with the first verification input parameter. If the verification codes are the same, the verification is successful, and the packet is allowed to pass. Otherwise, the packet is denied to pass. Optionally, before step 802, the method may include: determining, by the first transmission node, itself as the first transmission node through a node type.
(1) The initiator information, the receiver information, a slice identifier, a business identifier, and a tunnel identifier are acquired from the data packet; (2) the IP, ingress interface, and VLAN/VxLAN/VNI identifier of the first transmission node are the IP, interface, and VLAN/VxLAN/VNI identifier for receiving the data packet of the first transmission node; and (3) the egress interface of the first transmission node is the interface for sending the data packet of the first transmission node.

At step 803, the first transmission node sends the data packet to the receiver via the second transmission node, wherein the data packet carries first transmission node information. The first transmission node may encapsulate an outer IP header, so that a first transmission node IP and a second transmission node IP are placed in the outer IP header, and remaining information of the first transmission node may be placed in an option or extension header of the packet. Alternatively, the outer IP header may not be encapsulated, and the first transmission node information is placed in an option or extension header of the packet.

At step 804, the second transmission node searches for a corresponding second verification input parameter from the memory based on the initiator information and the receiver information. Meanwhile, a fourth verification input parameter is acquired. Then, the second transmission node compares the fourth verification input parameter with the third verification input parameter. If the verification codes are the same, the verification is successful, and the packet is allowed to pass. Otherwise, the packet is denied to pass. Optionally, before step 804, the method may include: determining, by the second transmission node, itself as the second transmission node through the node type.
(1) The initiator information, the receiver information, the first transmission node information, the slice identifier, the business identifier, and the tunnel identifier in the verification input parameter are acquired from the data packet; (2) the IP, ingress interface, and VLAN/VxLAN/VNI identifier of the second transmission node are the IP, interface, and VLAN/VxLAN/VNI identifier for receiving the data packet of the second transmission node; and (3) a second transmission node egress interface is an interface for sending the data packet of the second transmission node.

At step 805, the second transmission node sends the data packet to the receiver.

In this embodiment, the second transmission node may not perform verification based on the first transmission node information. In this case, in the embodiment of FIG. 7, the first transmission node does not need to acquire the second transmission node information. In the embodiment of FIG. 8, the first transmission node does not need to carry the first transmission node information in the data packet. Other verification steps are consistent with the above embodiments and will not be repeated here.

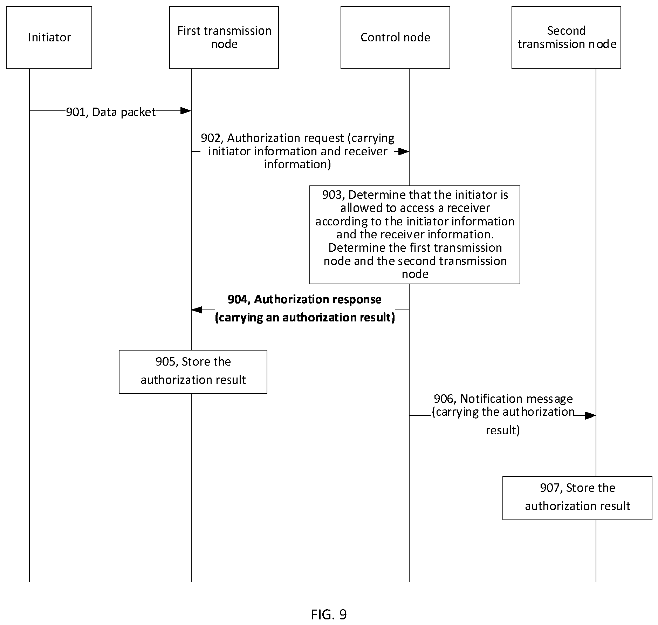

FIG. 9 shows a schematic flowchart of another transmission authorization method for a data packet provided by an exemplary embodiment of the present application. In this method embodiment, an authorization request is sent to a control node by a first transmission node, wherein first verification information includes an authorization result and a verification input parameter. Referring to FIG. 9, the method includes the following steps.

At step 901, an initiator sends a data packet to a receiver via a first transmission node.

At step 902, if the first transmission node determines that there is no authorization result corresponding to initiator information and receiver information, an authorization request is sent to a control node and carries initiator information and receiver information, wherein the initiator information and the receiver information are mandatory, while other verification input parameters are optional.

At step 903, the control node determines, according to the initiator information and the receiver information, that the initiator may access the receiver and a carried first verification input parameter is a verification input parameter corresponding to the initiator accessing the receiver, and then the authorization result is allowing to pass, otherwise the authorization result is not allowing to pass or denying.

At step 904, the control node sends an authorization response to the first transmission node, wherein the authorization response carries the authorization result.

At step 905, the first transmission node acquires and stores the first verification input parameter and the authorization result. In a case of caching the data packet in step 902, if the check is passed, the cached data packet is sent.

The way for the first transmission node to acquire the first verification input parameter may further include the following: the initiator sends the authorization request to the control node, and the control node notifies the first transmission node of the first verification input parameter and the authorization result. Besides, other steps are consistent with the above process and will not be repeated here.

At step 906, the control node sends a notification message to the second transmission node, wherein the notification message carries a second verification input parameter and the authorization result.

At step 907, the second transmission node acquires and stores the second verification input parameter and the authorization result.

The way for the second transmission node to acquire the second verification input parameter may also be at least one of the following: (1) the control node sends second transmission node information and the second verification input parameter to the first transmission node, and the first transmission node notifies the second transmission node of the second verification input parameter and the authorization result. In this way, other steps are consistent with the above process and will not be repeated here. (2) After receiving the data packet from the initiator, the second transmission node sends the authorization request to the control node, the authorization request carries the second verification input parameter, and the control node sends the authorization result to the second transmission node. In this way, the second transmission node may cache the data packet, and send the data packet to the receiver after the verification is passed, or discard the data packet. Besides, other steps are consistent with the above process and will not be repeated here.

Thus, the first transmission node or the second transmission node verifies the data packet through the acquired verification input parameter and authorization result.

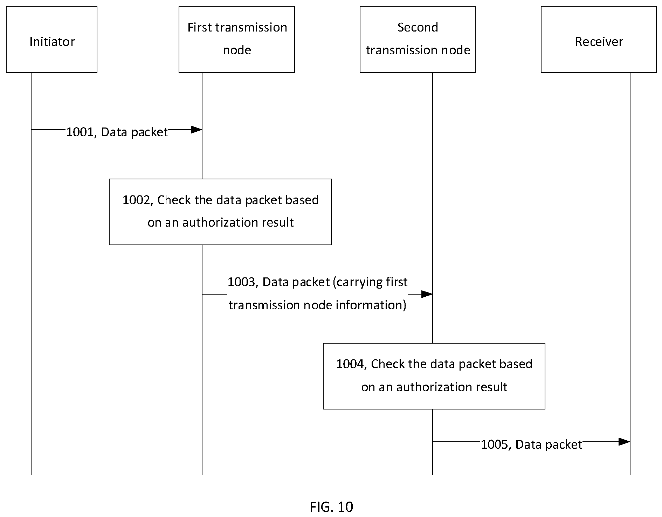

FIG. 10 shows a schematic flowchart of another method for transmitting a data packet provided by an exemplary embodiment of the present application. In this method embodiment, verification information is acquired from stored verification information based on a first transmission node and a second transmission node, wherein the verification information includes an authorization result and a verification input parameter. Referring to FIG. 10, the method includes the following steps.

At step 1001, an initiator sends a data packet to a receiver via a first transmission node.

At step 1002, the first transmission node searches for a corresponding first verification input parameter and the authorization result from the memory based on initiator information and receiver information. Meanwhile, a third verification input parameter is acquired. Then, the first transmission node compares the third verification input parameter with the first verification input parameter. If the verification input parameters are the same, the data packet is processed according to the authorization result. Optionally, before step 1002, the method may include that: the first transmission node determines itself as the first transmission node through a node type.
(1) The initiator information, the receiver information, a slice identifier, a business identifier, and a tunnel identifier are acquired from the data packet; (2) the IP, ingress interface, and VLAN/VxLAN/VNI identifier of first transmission node serve as the IP, interface, and VLAN/VxLAN/VNI identifier for receiving the data packet of the first transmission node; and (3) the egress interface of the first transmission node is the interface for sending the data packet of the first transmission node.

At step 1003, the first transmission node sends the data packet to the receiver via the second transmission node, wherein the data packet carries first transmission node information. The first transmission node may encapsulate an outer IP header, so that a first transmission node IP and a second transmission node IP are placed in the outer IP header, and remaining information of the first transmission node may be placed in an option or extension header of the packet. Alternatively, the outer IP header may not be encapsulated, and the first transmission node information is placed in an option or extension header of the packet.

At step 1004, the second transmission node searches for a corresponding second verification input parameter and the authorization result from the memory based on the initiator information and the receiver information. Meanwhile, a fourth verification input parameter is acquired. Then, the second transmission node compares the fourth verification input parameter with the third verification input parameter. If the verification input parameters are the same, the data packet is processed according to the authorization result. Optionally, before step 1004, the method may include: determining, by the second transmission node, itself as the second transmission node through the node type.
(1) The initiator information, the receiver information, the first transmission node information, the slice identifier, the business identifier, and the tunnel identifier in the verification input parameter are acquired from the data packet; (2) the IP, ingress interface, and VLAN/VxLAN/VNI identifier of the second transmission node are the IP, interface, and VLAN/VxLAN/VNI identifier for receiving the data packet of the second transmission node to; and (3) the egress interface of the second transmission node is an interface for sending the data packet of the second transmission node.

At step 1005, the second transmission node sends the data packet to the receiver.

In this embodiment, the second transmission node may not perform verification based on the first transmission node information. In this case, in the embodiment of FIG. 9, the first transmission node does not need to acquire the second transmission node information. In the embodiment of FIG. 10, the first transmission node does not need to carry the first transmission node information in the data packet. Other verification steps are consistent with the above embodiments and will not be repeated here.

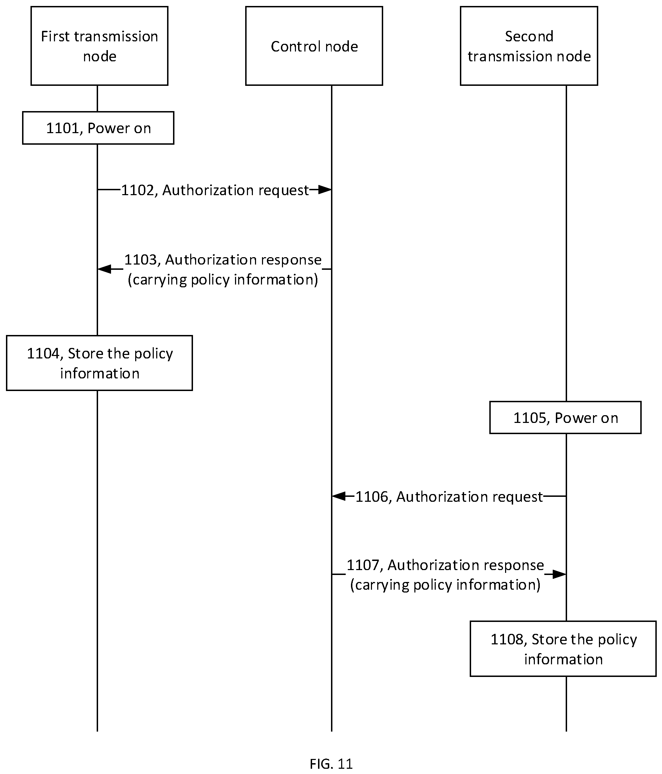

FIG. 11 shows a schematic flowchart of another transmission authorization method for a data packet provided by an exemplary embodiment of the present application. In this method embodiment, an authorization request is sent to a control node by a first transmission node, wherein first verification information includes policy information, and the policy information may include a verification input parameter and an authorization result. Referring to FIG. 11, the method includes the following steps.

At step 1101, the first transmission node is powered on.

At step 1102, the first transmission node sends the authorization request to the control node, to request the policy information.

Optionally, a triggering method for the first transmission node to send the authorization request to the control node may further include: if the first transmission node receives a data packet from an initiator, a policy request is sent to the control node, and the first transmission node may cache or discard the packet. Besides, other steps are consistent with the above process and will not be repeated here.

At step 1103, the control node sends an authorization response to the first transmission node, wherein the authorization response carries the policy information. The policy information may include the verification input parameter and the authorization result. The policy information may be a single policy or a plurality of policies.

At step 1104, the first transmission node acquires and stores the policy information.

At step 1105, a second transmission node is powered on.

At step 1106, the second transmission node sends the authorization request to the control node, to request the policy information.

Optionally, a triggering method for the second transmission node to send the authorization request to the control node may further include: if the second transmission node receives the data packet from the initiator, the policy request is sent to the control node, and the second transmission node may cache or discard the packet. Besides, other steps are consistent with the above process and will not be repeated here.

At step 1107, the control node sends an authorization response to the second transmission node, wherein the authorization response carries the policy information. The policy information may include the verification input parameter and the authorization result. The policy information may be a single policy or a plurality of policies.

At step 1108, the second transmission node acquires and stores the policy information.

There is no necessary order from step 1101 to step 1104 and from step 1105 to step 1108.

Thus, the first transmission node or the second transmission node verifies the data packet through the acquired policy information.

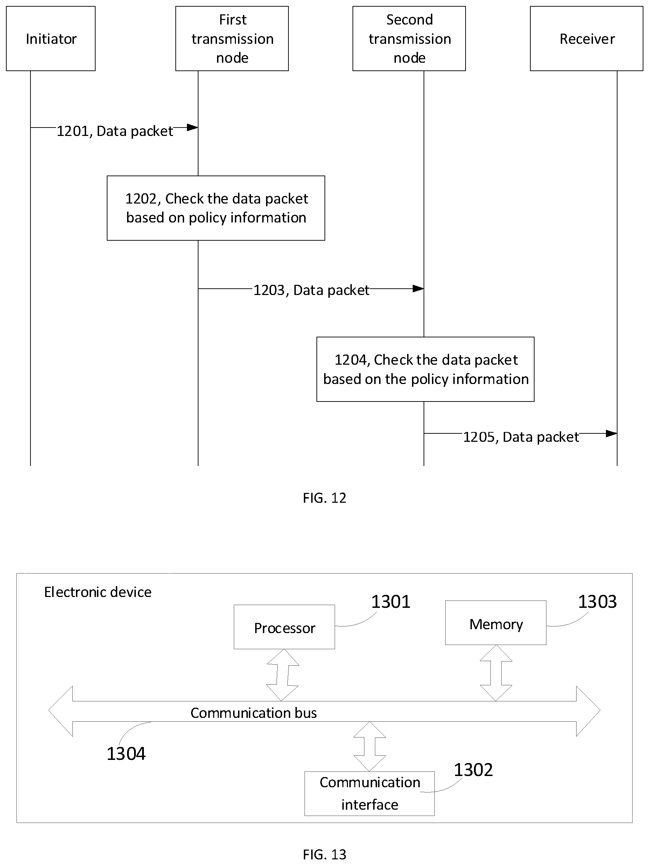

FIG. 12 shows a schematic flowchart of another method for transmitting a data packet provided by an exemplary embodiment of the present application. In this method embodiment, verification information is acquired from stored verification information based on a first transmission node and a second transmission node, wherein the verification information includes policy information. Referring to FIG. 12, the method includes the following steps.

At step 1201, an initiator sends a data packet to a receiver via a first transmission node.

At step 1202, the first transmission node searches for corresponding policy information from the memory based on relevant information of the received data packet. Meanwhile, a verification input parameter is acquired. Then the first transmission node compares the verification input parameter with the policy information. If they are the same, the data packet is processed according to an authorization result of the policy information. Optionally, before step 1202, the method may include: determining, by the first transmission node, itself as the first transmission node through a node type.

(1) Initiator information, receiver information, a slice identifier, a business identifier, and a tunnel identifier are acquired from the data packet; (2) the IP, ingress interface, and VLAN/VxLAN/VNI identifier of the first transmission node are the IP, interface, and VLAN/VxLAN/VNI identifier for receiving the data packet of the first transmission node; and (3) the egress interface of the first transmission node is the interface for sending the data packet of the first transmission node.

At step 1203, the first transmission node sends the data packet to the receiver via the second transmission node. Optionally, the data packet carries first transmission node information.

At step 1204, the second transmission node searches for corresponding policy information from the memory based on relevant information of the received data packet. Meanwhile, a verification input parameter is acquired. Then the second transmission node compares the verification input parameter with the policy information. If they are the same, the data packet is processed according to the authorization result of the policy information. Optionally, before step 1204, the method may include: determining, by the second transmission node, itself as the second transmission node through the node type.
(1) The initiator information, the receiver information, the first transmission node information, the slice identifier, the business identifier, and the tunnel identifier in the verification input parameter are acquired from the data packet; (2) the IP, ingress interface, and VLAN/VxLAN/VNI identifier of the second transmission node are the IP, interface, and VLAN/VxLAN/VNI identifier for receiving the data packet of the second transmission node to; and (3) the egress interface of the second transmission node is the interface for sending the data packet of the second transmission node.

At step 1205, the second transmission node sends the data packet to the receiver.

In this embodiment, the second transmission node may not perform verification based on the first transmission node information. In this case, in the embodiment of FIG. 11, the first transmission node does not need to acquire the second transmission node information. In the embodiment of FIG. 12, the first transmission node does not need to carry the first transmission node information in the data packet. Other verification steps are consistent with the above embodiments and will not be repeated here.

It should be noted that in the above embodiments, the node type and the secret key may be pre-configured on the first transmission node and the second transmission node. Alternatively, the node type and the secret key may also be configured by the control node when the first transmission node and the second transmission node are powered on.

Through the embodiments of the present application, the data packet that needs to be transmitted may be checked at any transmission node between the initiator and the receiver, so as to achieve timely and accurate network security protection and solve the problem of lagging and inefficient network security protection in the related art.

In an exemplary embodiment, an electronic device is further provided. The electronic device is configured to perform the above method for transmitting the data packet and the above transmission authorization method for the data packet. FIG. 13 is a schematic structural diagram of an electronic device for implementing various embodiments of the present application. The electronic device may vary significantly due to differences in configuration or performance, and may include: a processor 1301, a communication interface 1302, a memory 1303, and a communication bus 1304, wherein the processor 1301, the communication interface 1302, and the memory 1303 complete mutual communication through the communication bus 1304. The processor 1301 may call a computer program stored on the memory 1303 and runnable on the processor 1301 to perform all or part of the steps of the above method embodiments, and can achieve the same technical effect, which will not be repeated here to avoid repetitions.

The above electronic device structure does not constitute a limitation on the electronic device. The electronic device may include more or fewer components than shown in the diagram, or combine certain components, or arrange different components. For example, an input unit may include a graphics processing unit (GPU) and a microphone, and a display unit may be configured with a display panel in a form of a liquid crystal display, an organic light-emitting diode, and the like. The user input unit includes at least one of a touch panel or other input devices. The touch panel is also known as a touch screen. Other input devices may include, but are not limited to, a physical keyboard, a functional key (such as a volume control key or a switch key), a track ball, a mouse, and a joystick, which are not repeated here.

The memory may be configured to store a software program and various data. The memory may mainly include a first storage area for storing a program or an instruction and a second storage area for storing data. The first storage area may store an operating system, an application program or instruction required by at least one function (such as a sound playback function and an image display function), and the like. In addition, the memory may include a volatile memory or a non-volatile memory, or the memory may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct rambus RAM (DRRAM).

The processor may include one or more processing units. Optionally, the processor integrates an application processor and a modem processor, wherein the application processor mainly processes operations related to an operating system, a user interface, an application program and the like, and the modem processor mainly processes a wireless communication signal, such as a baseband processor. It may be understood that the above modem processor may also not be integrated in the processor.

In an exemplary embodiment, a readable storage medium is further provided. The readable storage medium stores a program or an instruction thereon, and the program or the instruction, when executed by a processor, implements the steps of the above embodiment of the method for transmitting the data packet, or implements the steps of the above embodiment of the transmission authorization method for the data packet. For example, the readable storage medium may be a read-only memory (ROM), a random access memory (RAM), a compact disc read-only memory (CD-ROM), a magnetic tape, a floppy disk, an optical data storage device and the like.

Those skilled in the art will easily figure out other implementation solutions of the present application after considering the specification and practicing the invention disclosed here. The present application intends to cover any transformation, usage or adaptive change of the present application, and these transformations, usages or adaptive changes conform to a general principle of the present application and include common general knowledge or conventional technical means in the technical field not disclosed by the present application. The specification and the embodiments are merely regarded as being for example, and the true scope and spirit of the present application are indicated by the claims.

It will be appreciated that the present application is not limited to the exact structure that has been described above and shown in the accompanying drawings, and that various modifications and changes may be made without departing from the scope of the present application. The scope of the present application is limited merely by the appended claims.

## Claims

1. A method for transmitting a data packet, performed by a transmission node between an initiator and a receiver, comprising:
acquiring first verification information;
acquiring, in a case where a first data packet is received, to-be-verified information based on the first data packet;
verifying the to-be-verified information based on the first verification information; and
transmitting the first data packet in a case where verification is passed.

2. The method according to claim 1, wherein acquiring the first verification information comprises:
receiving, by the transmission node, a first message from a control node, wherein the first message carries the first verification information; or
acquiring, by the transmission node, the first verification information configured at the transmission node.

3. The method according to claim 2, wherein prior to receiving, by the transmission node, the first message from the control node, further comprising:
sending, by the transmission node, a second message to the control node, wherein the second message is used to request the first verification information.

4. The method according to claim 3, wherein sending, by the transmission node, the second message to the control node comprises:
sending, by the transmission node, the second message to the control node after receiving a second data packet, wherein the second message carries initiator information and receiver information of the second data packet; or
sending, by the transmission node, the second message to the control node after being powered on.

5. The method according to claim 4, wherein the initiator information comprises at least one of the following: an initiator identifier, an initiator Internet protocol called IP, an initiator address field, an initiator port, or media access control called MAC; and
the receiver information comprises at least one of the following: a receiver identifier, a receiver IP, a receiver address field, a receiver port, or MAC.

6. The method according to claim 2, wherein after receiving, by the transmission node, the first message from the control node, further comprising:
sending, in a case where the transmission node is a first transmission node, second verification information to a second transmission node based on second transmission node information carried in the first message, wherein the first transmission node is located before the second transmission node on a transmission path from the initiator to the receiver;
wherein the second transmission node information comprises at least one of the following: an IP of the second transmission node, an ingress interface of the second transmission node, an egress interface of the second transmission node, a virtual local area network called VLAN identifier of the second transmission node, a virtual extensible local area network called VXLAN identifier of the second transmission node, or a VXLAN network identifier called VNI of the second transmission node.

7. The method according to claim 6, wherein the first message carries first indication information, and the first indication information is used to indicate a node type of the transmission node.

8. The method according to claim 1, wherein acquiring the first verification information comprises:
receiving, in a case where the transmission node is the second transmission node, a third message from the first transmission node, wherein the third message carries the first verification information, and the first transmission node is located before the second transmission node on a transmission path from the initiator to the receiver.

9. The method according to any one of claims 1 to 8, wherein the first data packet carries a first verification code; the first verification information comprises a secret key and a verification input parameter; and
verifying the to-be-verified information based on the first verification information comprises:
acquiring a parameter value of the verification input parameter of the first data packet;
performing calculation based on the secret key and the acquired parameter value to obtain a second verification code; and
verifying whether the first verification code carried in the first data packet matches the obtained second verification code.

10. The method according to claim 9, wherein transmitting the first data packet in the case where verification is passed comprises:
transmitting, in a case where the transmission node is the first transmission node and verification is passed, the first data packet to the second transmission node after first transmission node information is added to the first data packet, wherein the first transmission node is located before the second transmission node on the transmission path from the initiator to the receiver;
wherein the first transmission node information comprises at least one of the following: an IP of the first transmission node, an ingress interface of the first transmission node, an egress interface of the first transmission node, a VLAN identifier of the first transmission node, a VXLAN identifier of the first transmission node, or a VNI of the first transmission node.

11. The method according to any one of claims 1 to 10, wherein the first verification information comprises: a verification value of the verification input parameter;
acquiring the to-be-verified information based on the first data packet comprises: acquiring a parameter value of the verification input parameter of the first data packet based on the first data packet; and
verifying the to-be-verified information based on the first verification information comprises: verifying whether the parameter value of the verification input parameter of the first data packet matches the verification value of the verification input parameter.

12. The method according to any one of claims 1 to 10, wherein the first verification information comprises policy information, the policy information comprises an authorization result, and the authorization result comprises one of the following: allowing transmission, not allowing transmission, or denying transmission; and
verifying the to-be-verified information based on the first verification information comprises one of the following:
verifying whether an initiator and a receiver of the first data packet match an initiator and a receiver for allowing transmission in the authorization result;
verifying whether the initiator and the receiver of the first data packet match an initiator and a receiver for not allowing transmission in the authorization result; or
verifying whether the initiator and the receiver of the first data packet match an initiator and a receiver for denying transmission in the authorization result.

13. The method according to claim 12, wherein the policy information further comprises: a first value of the verification input parameter; and verifying the to-be-verified information based on the first verification information comprises:
verifying, in a case where the initiator and the receiver of the first data packet match the initiator and the receiver in the authorization result, whether a second value of the verification input parameter of the first data packet matches the first value of the verification input parameter.

14. The method according to claim 13, wherein the verification input parameter comprises at least one of the following: initiator information, receiver information, first transmission node information, second transmission node information, a slice identifier, a business identifier, or a tunnel identifier.

15. The method according to claim 1, wherein the initiator comprises a terminal and a network side device; the receiver comprises a terminal and a network side device; wherein a network side device comprises one of the following: a server, a manager, a controller, or an access gateway; and
the transmission node comprises one of the following: a router, a switch, a gateway, or customer premise equipment called CPE.

16. A transmission authorization method for a data packet, comprising:
determining, by a control node, to allow an initiator corresponding to initiator information to access a receiver corresponding to receiver information based on the initiator information and the receiver information; and
sending, by the control node, first verification information to the initiator or a transmission node between the initiator and the receiver.

17. The method according to claim 16, wherein prior to determining, by the control node, to allow the initiator corresponding to the initiator information to access the receiver corresponding to the receiver information based on the initiator information and the receiver information, further comprising:
receiving an authorization request from the initiator or the transmission node, wherein the authorization request carries the initiator information and the receiver information.

18. The method according to claim 17, wherein sending, by the control node, the first verification information to the initiator comprises:
calculating, by the control node, a first verification code based on a secret key, and a first value of a verification input parameter corresponding to allowing the initiator to access the receiver; and
sending, by the control node, an authorization response to the initiator, wherein the authorization response carries the first verification code.

19. The method according to claim 17, wherein sending, by the control node, the first verification information to the transmission node comprises:
sending, by the control node, a first message to the transmission node, wherein the first message carries the initiator information and the receiver information.

20. The method according to claim 19, wherein the first message further carries a secret key.

21. The method according to claim 19, wherein the first message further carries a node type of the transmission node.

22. The method according to claim 19, wherein the first verification information further comprises:
a first value, which is sent to the transmission node, of a verification input parameter corresponding to allowing the initiator to access the receiver.

23. The method according to any one of claims 19 to 22, wherein the first verification information further comprises an authorization result.

24. The method according to any one of claims 19 to 22, wherein the first message comprises all authorization information allowing the initiator to access the receiver.

25. An electronic device, comprising a processor and a memory, wherein the memory stores a program or instruction runnable on the processor, and the program or the instruction, when executed by the processor, implements the steps of the method for transmitting the data packet according to any one of claims 1 to 15, or implements the steps of the transmission authorization method for the data packet according to any one of claims 16 to 24.

26. A readable storage medium, storing a program or an instruction thereon, wherein the program or the instruction, when executed by a processor, implements the steps of the method for transmitting the data packet according to any one of claims 1 to 15, or implements the steps of the transmission authorization method for the data packet according to any one of claims 16 to 24.
